# EUROPEAN PATENT APPLICATION

(11) **EP 4 395 139 A1**
(43) Date of publication of application: **03.07.2024**
(21) Application number: 22217019.3
(22) Date of filing: 28.12.2022
(51) Int. Cl.: H02K 5/128, H02K 5/132

(54) **IN-LINE HYDROGEN PROCESSING**

(71) Applicant: Nidec ASI S.p.A., 20092 Cinisello Balsamo MI (IT)
(72) Inventor: Luise, Fabio, 30174 Zelarino - Venezia (IT); Tonello, Carlo, 34074 Monfalcone (IT); Pieri, Stefano, 34079 Staranzano (IT)
(74) Representative: Perani & Partners S.p.A.

(57) **Abstract**

In a turbomachinery apparatus (100) for processing hydrogen, a turbomachinery (120) is coupled to an electric machine (130) inside a vessel (110) to be filled with hydrogen. A rotor (1) of the electric machine (130) has permanent magnets (3) arranged along a lateral surface (22) of the rotor body (2). A metallic layer (4) covers the permanent magnets (3) and is seal to the rotor body (2) to seal the permanent magnets (3) against hydrogen. A retention layer (5) made of a fiber reinforced polymer material, preferably a carbon fiber reinforced resin, surrounds the metallic layer (4). Preferably, the retention layer (5) is formed by sequentially cold press fitting retention rings (51), aligned side by side in th axial direction (X-X).

## Description

### Technical field

The present invention belongs to the fields of electric machines and of turbomachineries, in particular turbomachineries enclosed in vessels to process hydrogen, driven by electric machines submerged in the same process gas.

### Background of the invention

Turbomachinery apparatuses are known for in-line processing viscous fluids like natural gas (methane), namely in gas pipelines. Such apparatuses include a vessel and a turbomachinery, like a compressor or a turbine, arranged in the vessel and submerged in the fluid, in order to process the fluid. The turbomachinery is coupled to an electric machine, like an electric motor configured to drive the compressor, or an electric generator driven by the turbine. The electric machine can be arranged in the same vessel, and thus submerged in the process fluid too. EP 3244513 A1 describes an example of such apparatus. A similar kind of apparatus would be desirable for processing hydrogen.

### Problem of the prior art

Due to the peculiar viscosity of hydrogen, industrial size turbomachinery must rotate at a very high speed, like 20000 rpm. With such speeds, current technologic constraints prefer the electric machine to be a permanent magnet machine, and not other kinds of electric machines like induction machines or switched reluctance machines.

However, problems arise when submerging permanent magnets in hydrogen. In fact, hydrogen molecules (H₂) are very small, and may permeate interstices of the permanent magnets. This causes the permanent magnets to be progressively shattered.

An effective solution to these problems can be metal jacketing the rotor parts, but direct use of the known technologies imply high costs, in particular if posthumous magnetization is necessary.

### Summary of the invention

The object of the present invention is tackling the above problems, and providing a solution for in-line hydrogen processing.

This and other objects are achieved by a rotor, an electric machine, a turbomachinery apparatus, and a process for manufacturing the rotor, according to any of the attached claims.

The invention provides that a metallic layer is arranged around the magnets of the rotor of the electric machine, so as to have a cover region covering the permanent magnets and a sealing region joined to the rotor body, in order to seal the permanent magnets against hydrogen, between the metallic layer and the rotor body. A retention layer made of a fiber reinforced polymer material is arranged over the metallic layer for retaining in position the metallic layer and the permanent magnets against centrifugal force during operation of the rotor.

In the preferred embodiment, the metallic layer is welded to the rotor body, preferably by electron beam welding, at two annular sealing regions spaced apart along the axial direction.

In the preferred embodiment, the retention layer is made of a plurality of retention rings aligned to each other in the axial direction. The retention rings can be cold fitted in position, for example by hydraulic pressing.

Preferably, the rotor body comprises a rotor core and a sleeve support fitted over the rotor core, and the permanent magnets are sandwiched and sealed between the sleeve support and the metallic layer.

Preferably, this metallic layer is a good electrical conductor, and acts as an electromagnetic shield since it is arranged between the permanent magnets and the retention layer, to protect the permanent magnets from variable magnetic fields generated by the stator.

### Brief description of the drawings

More features and advantages of the present invention will result from the following detailed description of preferred embodiments, which are illustrated without limitation in the annexed drawings, wherein:
- figure 1 schematically shows a turbomachinery apparatus for processing hydrogen according to one embodiment of the invention,
- figure 2 schematically shows a longitudinal cross section of an electric machine of the turbomachinery apparatus, according to one embodiment of the invention,
- figures 3-6 and 8-11 show longitudinal cross sections of a rotor of the electric machine according to another embodiment of the invention, during different manufacturing steps,
- figure 7 shows a frontal cross section of a portion of the rotor of the electric machine according to another embodiment of the invention, and
- figure 12 shows a frontal cross section of the rotor of the electric machine, according to the embodiment of figures 3-6 and 8-11.

### DETAILED DESCRIPTION

One object of the invention is a turbomachinery apparatus 100, comprising a vessel 110, a turbomachinery 120 arranged inside the vessel 110, and an electric machine 130, arranged inside the vessel 110 and mechanically coupled to the turbomachinery 120.

While the vessel 110 and the turbomachinery 120 are per se known in the art, and can be routinely designed by a skilled person, the electric machine 130 includes special features and can be individually provided as another independent object of the present invention.

The electric machine 130 in turn comprises a stator 131 and a rotor 1. While the stator 131 is per se known in the art, and can be designed by a skilled person according to known criteria (probably of slotless type), the rotor 1 includes special features and can be individually provided as another independent object of the present invention.

A further independent object of the present invention is a process for manufacturing at least the rotor 1 of the electric machine 130.

Features of the apparatus 100 will be first described to better understand features of the electric machine 130.

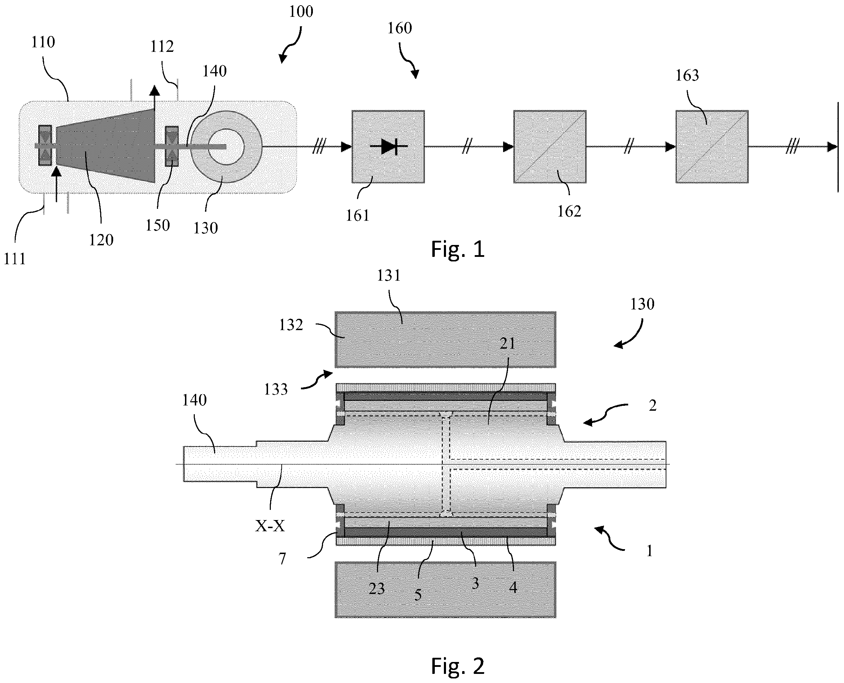

The vessel 110 has a fluid inlet 111 and a fluid outlet 112 for a flow of hydrogen to enter and exit the vessel 110. A part from this, the vessel 110 is a fluid-tight vessel, preferably a high-pressure vessel, namely configured to be fluid-tight until reaching a maximum fluid pressure in the range between 20 and 150 bar. The vessel 110, as well as the turbomachinery 120, are only schematically shown in figure 1.

The turbomachinery 120 is configured to process the flow of hydrogen and can be a compressor or a turbine. In general, as known to the skilled person, process plants and pipelines may require plural turbomachinery apparatuses 100 to be installed at various positions of the plant, some of them including compressors and some including turbines. In some embodiments, the turbomachinery 120 of an apparatus 100 may be adapted to be reversibly operated either as a compressor or as a turbine.

In both cases, the turbomachinery 120 comprises (at least one) stator and (at least one) rotor (not shown). The turbomachinery 120 is configured to process hydrogen received in the vessel 110 through the fluid inlet 111, and to discharge hydrogen outside the vessel 110 through the fluid outlet 112.

It is to be noted that the vessel 110 and the turbomachinery 120 do not prevent hydrogen from filling the entire vessel 110 and circulating therein. Thus, both the turbomachinery 120 and the electric machine 130 in use are submerged in hydrogen.

The apparatus 100 comprises a rotating shaft 140. The rotor of the turbomachinery 120 is fixed or coupled to the rotating shaft 140, or is formed in one piece with the rotating shaft 140. Instead, the stators of the turbomachinery 120 and of the electric machine 130 are fixed to the vessel 110 (directly or indirectly).

The apparatus 100 further comprises bearings 150, preferably active magnetic bearings 150, configured to rotationally support the rotating shaft 140 relative to the vessel 110. One or more bearings 150 may be arranged by the skilled person at various positions of the rotating shaft 140. Thus, the rotating shaft 140 magnetically levitates, supported in levitation by the magnetic bearings 150. Magnetic bearings 150 prevent mechanical wear of rotating parts and do not impair gas tightness of the vessel 110, which may be undermined in case of other kinds of bearings 150.

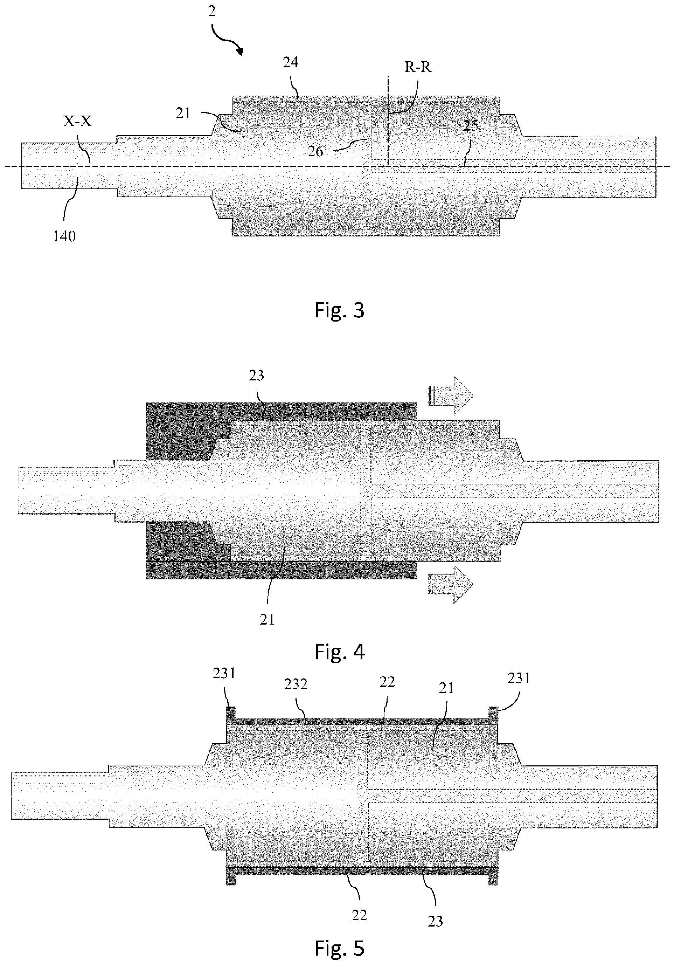

The rotor 1 of the electric machine 130 comprises a rotor body 2 having a rotor core 21, which is fixed to the rotating shaft 140, or formed in one piece with the rotating shaft 140, as best shown in figure 3. Thus, the rotor 1 of the electric machine 130 is configured for rotation about a rotor axis, relative to the vessel 110 and to the stator 131 of the electric machine 130, together with the rotating shaft 140 and the rotor of the turbomachinery 120. The rotor axis extends in an axial direction X-X. It is to be noted that the turbomachinery 140 is spaced from the electric machine 130 in the axial direction X-X.

The rotor body 2, and in particular the rotor core 21, is preferably made of a soft ferromagnetic material, such as magnetic steel. Non laminated magnetic steel is preferred, and most preferred is non-laminated high tensile forged magnetic steel, namely with a yield strength of at least 500MPa.

Preferably, the rotor 1 is configured for rotation at a speed of at least 15000 rpm, such as 20000 rpm. This is achieved by proper mechanical and magnetic design of the rotor 1, of the stator 131, and by proper electric control of the electric machine 130, in a known manner.

The electric machine 130 can be a motor, a generator, or a machine suitable to be reversibly operated as a motor or a generator. The electric machine is shown as a simplified icon in figure 1. Its stator 131 is only schematically shown in figure 2.

The stator 131 of the electric machine 130 is fixed to the vessel 110, directly or indirectly. The stator 131 includes a stator body 132, preferably made of a ferromagnetic material, such as a laminated low losses magnetic material. The stator 131 further comprises electrically conductive windings (not shown) secured to the stator body 132. The stator body 132 may have recesses (not shown) for accommodating the windings in a known manner. Preferably, the windings are configured in a known manner to be supplied with alternated current, such as a three-phase alternated current.

The apparatus 100 comprises an electric supply system 160 configured to exchange electric power with the windings, as shown in figure 1. Preferably, the electric supply system 160 is arranged outside the vessel 110, and comprises one or more electric converters 161, 162, 163. In the embodiment of the figures, as the turbomachinery 120 is a turbine and the electric machine 130 is operated as a generator, the converters may comprise a passive rectifier 161, a dc-dc converter 162, and an AFE (active front-end) dc to ac converter 163. However, depending on design needs, the skilled person may provide different numbers, natures and arrangements of the converters 161, 162, 163, including active and/or passive converters designed to be operated with alternated current and/or direct current on one or both sides.

The stator 131 has a stator cavity 133, and the windings are configured to generate a magnetic field in the stator cavity 133 when appropriate currents flow in the windings. The stator cavity 133 is substantially cylindrical, centered on the rotor axis, and the rotor 1 of the electric machine 130 is arranged in the stator cavity 133.

The rotor body 2 has a substantially cylindrical lateral surface 22 centered on the rotor axis. The lateral surface 22 faces the stator 131 in a radial direction R-R, perpendicular to the axial direction X-X. An air gap is defined between the lateral surface 22 of the rotor body 2 and the stator 131.

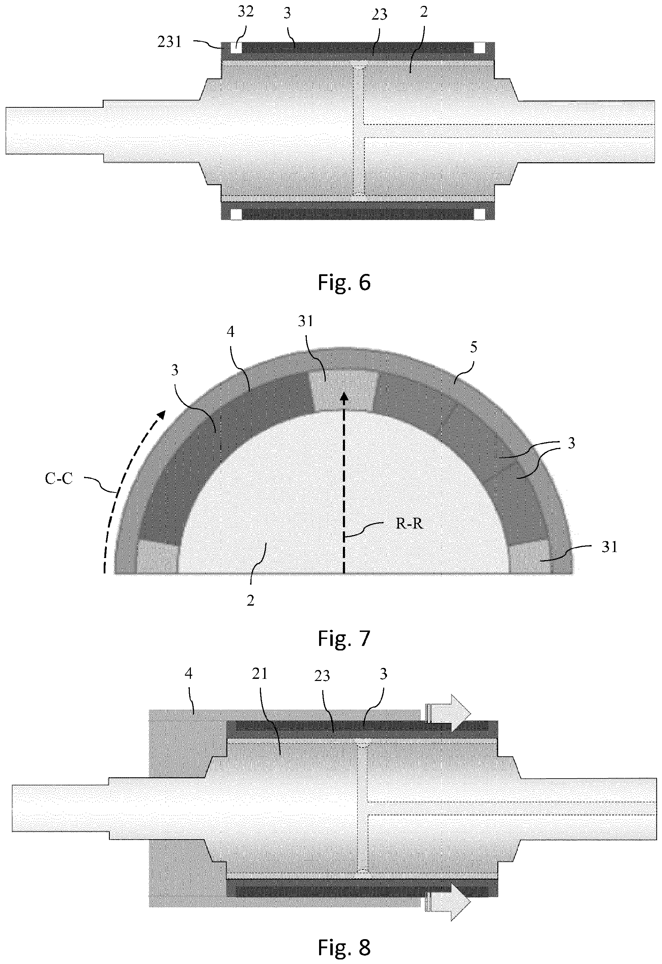

Permanent magnets 3 are arranged along the lateral surface 22 of the rotor body 2. In the preferred embodiments, as best visible in figure 7, the permanent magnets 3 are formed as wedge-shaped blocks, in particular with wedge surfaces converging toward the rotor axis. The permanent magnets 3 are aligned to each other in a circumferential direction C-C around the rotor axis.

Depending on the magnetic design of the electric machine 130, some permanent magnets 3 may have a north magnetic pole oriented toward the rotor body 2, while other permanent magnets 3 may have the north magnetic pole oriented away from the rotor body 2. The opposite is true for their respective south magnetic poles.

In the preferred embodiment, the rotor body 2 comprises a sleeve support 23 covering the rotor core 21 in the radial direction R-R, preferably shaped as a sleeve. The sleeve support 23 can be made of a rigid, soft ferromagnetic material such as magnetic steel, namely the same material as the rotor core 21. The sleeve support 23 is arranged between the rotor core 21 and the permanent magnets 3.

In the preferred manufacturing process of the rotor body 2, the rotor core 21 is shaped by lathing and the sleeve support 23 is thermal fitted on the lateral surface 22.

The permanent magnets 3 are fixed, such as glued, to the lateral surface 22, and in particular to the sleeve support 23, as shown in figure 6. The sleeve support 23 may have one or more seats for receiving the permanent magnets 3. In the preferred embodiment, the sleeve support 23 comprises two end ribs 231, spaced to each other in the axial direction X-X, and a sleeve base wall 232 connecting the end ribs 231. Each end rib 231 extends mainly in the circumferential direction C-C, and radially projects from the rotor core 21 and the base wall 232.

The end ribs 231 and the base wall 232 may be formed by milling the sleeve support 23, preferably after fitting the sleeve support 23 on the rotor core 21. The step of fitting is shown in figure 4, while the result after milling is shown in figure 5.

Thus, a seat for the permanent magnets 3 is defined on the base wall 232, between the end ribs 231, and the permanent magnets 3 are arranged and fixed on the base wall 232. Preferably, after positioning the permanent magnets 3, a step of cool grinding is performed to ensure that the permanent magnets 3 are flush with the end ribs 231.

It is to be noted that, in different circumferential positions of the seat permanent magnets 3 may have different magnetic orientations. In order not to leave some portions of the seat empty, filler pieces 31, namely formed as wedge-shaped bars, may be arranged on the base wall 232 too, between some permanent magnets 3.Further filler pieces 32 may be arranged between the permanent magnets 3 and the end ribs 231 to limit the magnetic short-circuit and to limit the centrifugal pressure discontinuity, as shown in figure 6.

The rotor body 2, and in particular the rotor core 21, has cooling ducts 24, 25, 26, for a flow of a cooling fluid to withdraw heat from the rotor body 2, as best shown in figure 3. In the preferred embodiment, the cooling fluid is the hydrogen itself in which the electric machine 130 is submerged, and no further cooling fluid is provided. In more detail, the cooling fluid may be hydrogen bled from the turbomachinery 120 through bleeding ducts (not shown).

Preferably, at least some cooling ducts 24, 25 have two ends spaced in the axial direction X-X. In the preferred embodiments, at least some cooling ducts 24 are formed as superficial grooves of the of the rotor core 21, extending mainly in the axial direction X-X.

One or more cooling ducts 25, 26 may also be formed as through holes bored in the rotor body 2, in particular in the rotor core 21. In the embodiment of the figures, one central axial cooling duct 25 is arranged along the rotor axis, for at least part of the axial length of the rotor body 2. Moreover, plural radial cooling ducts 26 extend radially from the central axial cooling duct 25 to the lateral surface 22.

The cooling ducts 24, 25, 26 are formed before positioning the permanent magnets 3 and the sleeve support 23. In particular, the cooling ducts 24, 25, 26 can be formed by deep drilling and/or surface channeling, depending if they are superficial or internal to the rotor core 21.

It is to be noted that, where some cooling ducts 24 are formed as grooves and passed by a flow of hydrogen, the hydrogen must not reach the permanent magnets. In the preferred embodiments, this contact is prevented by the sleeve support 23.

In other embodiments, not shown, no sleeve support 23 is provided and the permanent magnets 3 may be directly fixed to the rotor core 21, as shown for example in figure 7. In these embodiments, cooling ducts 24 formed as grooves are either absent or run by a cooling fluid different from hydrogen.

According to the invention, a metallic layer 4 is configured for sealing the permanent magnets 3 against hydrogen. In more detail, the metallic layer 4 seals the permanent magnets 3 at least in the radial direction R-R, towards the air gap and the stator 131. In the preferred embodiment, the permanent magnets 3 are sealed from hydrogen in the axial direction X-X by the end ribs 231 of the sleeve support 23. In other embodiments, axial sealing may be achieved by further components therebetween, like front closure rings 7, preferably in a non-magnetic material, as shown in the embodiment of figure 2.

Thus, the permanent magnets 3 are sandwiched and sealed between the metallic layer 4 and the rotor body 2, namely the sleeve support 23 or the rotor core 21.

The metallic layer 4 surrounds the permanent magnets 3 and the rotor body 2 at least in the radial direction R-R. Preferably, the metallic layer 4 is shaped as a sleeve centered on the rotor axis. In more detail, the metallic layer 4 has a cover region covering the permanent magnets 3 and one or more sealing regions joined to the rotor body 2 to seal the permanent magnets 3 against hydrogen.

Preferably, the metallic layer 4 comprises two separate annular sealing regions spaced apart in the axial direction X-X. The sealing regions can be edge portions of the metallic layer 4. The cover region can be arranged between the annular sealing regions and connect them. In other embodiments, more sealing regions can be provided, surrounding plural cover regions. In further embodiments, a united sealing region may completely contour a cover region.

In the preferred embodiments, the metallic layer 4 is configured to shield the permanent magnets 3 from variable magnetic fields generated by current in the stator windings, to preserve the original magnetization of the permanent magnets 3. For this purpose, the metallic layer 4 is preferably made of a good conductive material, like copper, namely having a resistivity below 50 nQm. In other embodiments, the metallic layer 4 can be made of another pure metal, or of a metal alloy like Inconel ^{™}, this example not acting as an electromagnetic shield, or of a sequence of such layers.

At the same time, the metallic layer 4 will not impact on magnetic fields that are steady from the point of view of the metallic layer 4 itself. Thus, it will not shield the field of the permanent magnets 3, which rotate together with the metallic layer 4, and also any component of the magnetic field of the stator 131 rotating at the same speed as the rotor 1.

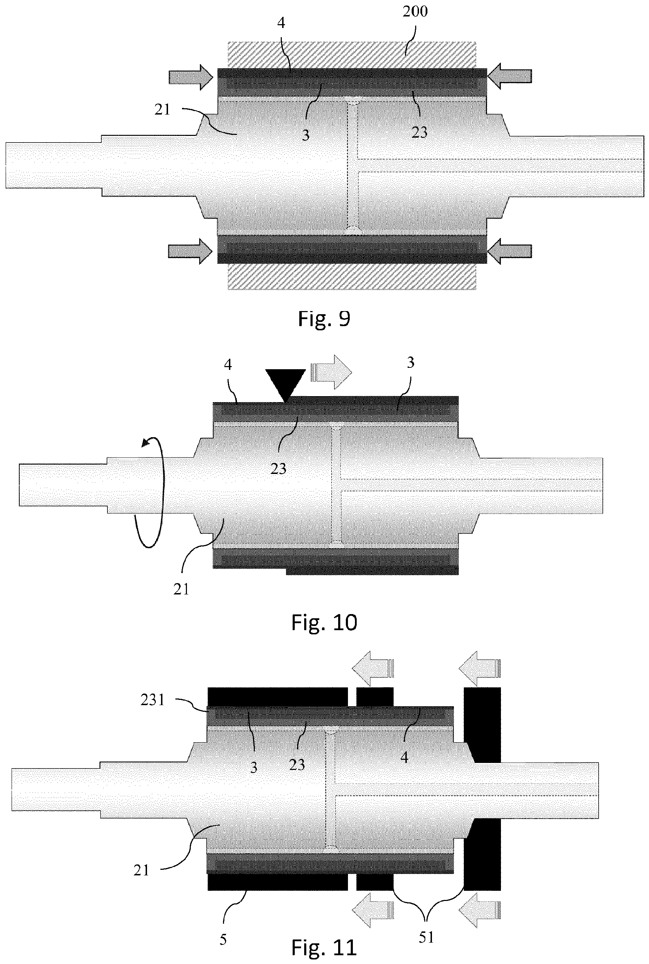

In the preferred manufacturing process, the metallic layer 4 is axially shrink fitted over the permanent magnets 3, at low temperature. Then, the metallic layer 4 is preferably lathed to the desired thinness. Fitting is shown in figure 8, and lathing in figure 10.

Additionally, the metallic layer 4 is preferably welded to the sleeve support 23 at the sealing regions of the metallic layer. The sealing regions are preferably welded to the end ribs 231 of the sleeve support 23. Preferably, welding is performed before lathing.

In more detail, welding is performed as a step of electron-beam welding (EBW). It is to be noted that this process involves electron rays which may be deflected by magnetic fields. Thus, in order to perform this step, it is preferred to reduce the impact of the magnetic field of the permanent magnets 3 by creating a magnetic short circuit, as shown in figure 9.

In particular, during this step the rotor 1 being manufactured is preferably arranged inside a magnetic cylinder 200, as close as possible to the surface of the metallic layer 4, possibly in contact thereto. Accordingly, magnetic field will pass through the magnetic cylinder 200 and only minimally be dispersed in air. Thus, it will not affect the electron-beam welding.

The rotor 1 further comprises a rigid retention layer 5, surrounding the metallic layer 4 and the permanent magnets 3 in the radial direction R-R. The retention layer 5 is configured to retain the metallic layer 4 and the permanent magnets 3 during rotation of the rotor 1. In fact, during rotation, especially at the required high speed, the metallic layer 4 is subject to a centrifugal force acting to deform and detach it from the rotor body 2. Also the permanent magnets 3 are subject to this force, radially pressing the metaling layer 4 from the inside away from the rotor body 2.

The provision of the retention layer 5 allows to realize a thin metallic layer 4, which otherwise should be rigid enough by itself to withstand centrifugal forces.

In the preferred embodiment, the retention layer 5 is made of a fiber reinforced polymer material. Preferably, the polymer is a resin. Moreover, the fibers reinforcing the polymer are preferably carbon fibers.

In the preferred embodiment, the retention layer 5 is formed of a plurality of retention rings 51 aligned to each other in the axial direction X-X. Thus, each retention ring 51 is made of the above described fiber reinforced polymer material. However, in other embodiments the retention layer 5 may also include further components than the retention rings 51, or may be formed in one piece.

The retention rings 51, where provided, are arranged side by side, in contact with each other along respective circular edge portions. The retention rings 51 are not necessarily fixed to each other, but may be just fitted against each other around the metallic layer 4, the permanent magnets 3 and the rotor body 2. The retention rings 51, together, completely cover the metallic layer 4 throughout its axial length.

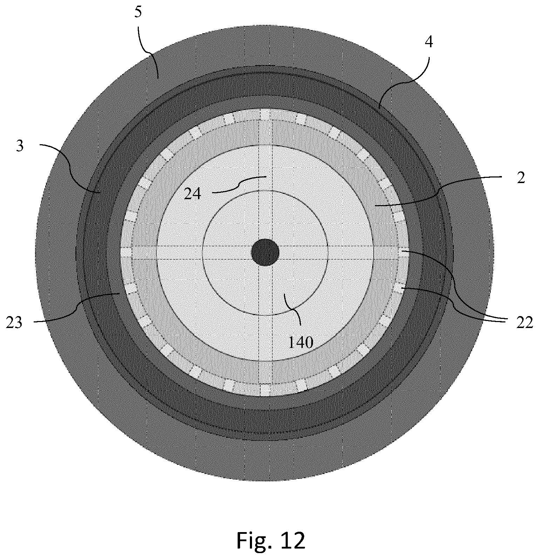

In the preferred manufacturing process of the rotor 1, the retention rings 51 are sequentially cold fitted over the permanent magnets 3 to form the retention layer 5, as shown in figure 11. Preferably, each retention ring 51 is fitted by hydraulic pressing. The assembled result of the rotor 1 is shown in figure 12.

It is to be noted that each retention ring 51 is a rigid body. Preferably, each retention ring is manufactured by filament winding over a mandrel (not shown), and then it is removed from the mandrel and fitted around the metallic layer 4, the permanent magnets 3 and the rotor body 2.

Moreover, each retention ring 51 is sized to maintain its position around the metallic layer 4, permanent magnets 3 and the rotor body 2 by interference fit. Thus, fitting involves a deformation of the retention rings 51.

In other embodiments, not shown, the retention layer 5 may be directly formed in one piece by filament winding around the metallic layer 4, the permanent magnets 3 and the rotor body 2.

While copper is preferred for the metallic layer 4, Inconel may be used instead of copper, or in addition to copper, to facilitate sliding of the retention rings 51 during cold fitting around the permanent magnets 3, in particular over the metallic layer 4. Other materials may be selected based on their conductivity and their sliding attrition with the retention rings.

## Claims

1. A rotor (1) for an electric machine (130) suitable for use submerged in hydrogen, comprising:
- a rotor body (2) configured for rotation about a rotor axis extending in an axial direction (X-X), the rotor body (2) having a lateral surface (22), and
- permanent magnets (3) arranged along the lateral surface (22) of the rotor body (2),
**characterized by** comprising:
- a metallic layer (4) having a cover region covering the permanent magnets (3) and a sealing region joined to the rotor body (2) to seal against hydrogen the permanent magnets (3) between the metallic layer (4) and the rotor body (2),
- a retention layer (5) surrounding the metallic layer (4) in a radial direction (R-R) perpendicular to the axial direction (X-X).

2. The rotor (1) of claim 1, wherein the metallic layer (4) comprises two annular sealing regions spaced apart in the axial direction (X-X), the cover region being arranged between the annular sealing regions.

3. The rotor (1) of claim 1 or 2, wherein the metallic layer (4) is configured to shield electromagnetic fields varying respect to the metallic layer (4).

4. The rotor (1) of any claim 1 to 3, wherein the metallic layer (4) is made of a metal, preferably copper, or a metal alloy, preferably Inconel.

5. The rotor (1) of any claim 1 to 4, wherein the retention layer (5) is made of a fiber reinforced polymer material, preferably a carbon fiber reinforced resin.

6. The rotor (1) of any claim 1 to 5, wherein the retention layer (5) comprises, preferably consists in, a plurality of retention rings (51) aligned to each other in the axial direction (X-X).

7. The rotor (1) of any claim 1 to 6, wherein the rotor body (2) comprises a rotor core (21) and a sleeve support (23) covering the rotor core (21) in the radial direction (R-R), the sleeve support (23) being preferably made of magnetic steel, the permanent magnets (3) being sandwiched and sealed between the sleeve support (23) and the metallic layer (4).

8. The rotor (1) of claim 7, wherein:
- the sleeve support (4) comprises two end ribs (41), spaced to each other in the axial direction (X-X), and a base wall (42) connecting the end ribs (41),
- the permanent magnets (3) are arranged on the base wall (42), and
- the end ribs (41) are sealed to respective sealing regions of the metallic layer (4).

9. The rotor (1) of any claim 1 to 8, wherein the rotor body (2) has cooling ducts (24, 25, 26), preferably formed at least in part as grooves of the lateral surface (22).

10. Electric machine (130), comprising:
- a stator (131), having a stator cavity (133) and windings configured to generate a magnetic field in the stator cavity (133) when a current flows therein, and
- the rotor (1) of any claim 1 to 9, arranged in the stator cavity (133).

11. A turbomachinery apparatus (100), comprising:
- a vessel (110) having a fluid inlet (111) and a fluid outlet (112) for a flow of hydrogen,
- a turbomachinery (120) arranged inside the vessel (110), and configured to process the flow of hydrogen,
- the electric machine (130) of claim 10, arranged inside the vessel (110) and mechanically coupled to the turbomachinery (120).

12. The apparatus (100) of claim 11, wherein the rotor (1) and at least part of the turbomachinery (120) are fixed or formed in one piece with a rotating shaft (140), and magnetic bearings (150) are configured to rotationally support the rotating shaft (140).

13. A process for manufacturing the rotor (1) of any claim 1 to 9, comprising at least, in order:
- providing the rotor body (2),
- positioning the permanent magnets (3) along the lateral surface (22) of the rotor body (2),
- shrink fitting, and then preferably lathing, the metallic layer (4) over the permanent magnets (3), and
- forming the retention layer (5), preferably by sequentially cold press fitting retention rings (51) around the metallic layer (4).

14. The process of claim 13, comprising welding a sealing region of the metallic layer (4) to rotor body (2).

15. The process of claim 14, wherein the step of welding is a step of electron-beam welding, and it is performed while the rotor (1) is arranged inside a magnetic cylinder suitable for creating a magnetic short circuit for the magnetic field of the permanent magnets (3).

16. The process of any claim 13 to 15, wherein providing the rotor body (2) comprises thermal fitting a sleeve support (23) on a rotor core (21), and preferably milling the sleeve support (23) to define two end ribs (41) and a base wall (42) connecting the end ribs (41), wherein positioning the permanent magnets (3) comprises fixing the permanent magnets (3) to the sleeve support (4), preferably to the base wall (42).
